(19) Europäisches Patentamt
European Patent Office
Office européen des brevets

(11) **EP 4 564 775 A1**

(12) **EUROPEAN PATENT APPLICATION**
published in accordance with Art. 153(4) EPC

(43) Date of publication:
04.06.2025 Bulletin 2025/23

(51) International Patent Classification (IPC):
**H04L 47/12** (2022.01)

(21) Application number: 23887727.8

(22) Date of filing: 17.10.2023

(52) Cooperative Patent Classification (CPC):
**H04L 47/127; H04L 47/2416; H04L 47/283**

(86) International application number:
**PCT/CN2023/124849**

(87) International publication number:
**WO 2024/099035 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 08.11.2022 CN 202211392917

(71) Applicant: Tencent Technology (Shenzhen)
Company Limited
Shenzhen, Guangdong 518057 (CN)

(72) Inventors:
• LIU, Boxi
Shenzhen, Guangdong 518057 (CN)
• CHEN, Huacheng
Shenzhen, Guangdong 518057 (CN)
• ZHENG, Zedong
Shenzhen, Guangdong 518057 (CN)

(74) Representative: EP&C
P.O. Box 3241
2280 GE Rijswijk (NL)

(54) **PARAMETER ADJUSTMENT METHOD AND RELATED APPARATUS**

(57) Embodiments of the present application disclose a parameter adjustment method and a related apparatus. The method comprises: once a data frame to be transmitted is acquired, instead of directly transmitting same to a receiving side, first estimating, according to a data volume corresponding to the data frame and an initial data transmission parameter for transmitting the data frame, whether a transmission duration corresponding to the data frame exceeds a maximum transmission delay; and if yes, adjusting a data transmission parameter, so that an actual transmission duration does not exceed the maximum transmission delay. Therefore, the data frame can be promptly transmitted to the corresponding receiving side on the basis of an actual data transmission parameter. According to the present application, by means of real-time and flexible dynamic parameter adjustment, each data frame to be transmitted can be ensured as much as possible to be promptly transmitted, thus preventing real-time communication lagging at the receiving side due to no data frames being received for a long time, thereby improving the real-time communication experience.

```
                                              S201
Acquire a to-be-transmitted data frame

                                              S202
Determine, based on a data volume corresponding to the to-
be-transmitted data frame and an initial data transmission
parameter, first estimated transmission duration
corresponding to the to-be-transmitted data frame

                                              S203
Adjust, in response to the first estimated transmission duration exceeding
the maximum allowable transmission delay, the initial data transmission
parameter by using reducing estimated transmission duration as an
adjustment goal to obtain an actual data transmission parameter

                                              S204
Transmit, based on the actual data transmission parameter,
the to-be-transmitted data frame to a receive side
corresponding to the to-be-transmitted data frame
```

FIG. 2

**Description**

RELATED APPLICATION

This application claims priority to Chinese Patent Application No. 202211392917.1, filed with the China National Intellectual Property Administration on November 8, 2022 and entitled "PARAMETER ADJUSTING METHOD AND RELATED APPARATUS".

FIELD OF THE TECHNOLOGY

This application relates to the field of data processing technologies, and in particular, to parameter adjustment.

BACKGROUND OF THE DISCLOSURE

A real-time communication technology is one of the popular technologies with a wide range of applications. The real-time communication technology mainly includes a real-time video communication technology and a real-time audio communication technology. For example, implementations of functions such as video livestreaming and voice calls all depend on the real-time communication technology.

In related art, during real-time communication, to-be-transmitted data needs to be encoded first to obtain a corresponding data frame, and the data frame is transmitted to a receive side for decoding and playback. However, a real-time communication technology in related art cannot ensure that the data frame is transmitted to the receive side timely, causing an object participating in the real-time communication to easily experience data reception freezing, and seriously affecting real-time communication experience.

SUMMARY

To resolve the foregoing technical problem, this application provides a data transmission method. According to the method, it may be ensured to a certain extent that a data frame is transmitted to a receive side timely, so that stability of real-time communication is improved.

Embodiments of this application disclose the following technical solutions.

According to a first aspect, an embodiment of this application provides a data transmission method. The method includes:

acquiring an input data frame, the input data frame having a corresponding maximum allowable transmission delay;

determining, based on a data volume of the input data frame and an initial data transmission parameter for transmitting the input data frame, a first estimated transmission duration of the input data frame ;

adjusting, in response to the first estimated transmission duration exceeding the maximum allowable transmission delay, the initial data transmission parameter to obtain an adjusted data transmission parameter, an estimated transmission duration for the input data frame determined based on the adjusted data transmission parameter being a second estimated transmission duration less than the first estimated transmission duration, and the second estimated transmission duration not exceeding the maximum allowable transmission delay; and

transmitting, based on the adjusted data transmission parameter, the input data frame to a receive side for the input data frame.

According to a second aspect, an embodiment of this application discloses a data transmission apparatus, including a first acquiring unit, a first determining unit, a first adjusting unit, and a transmitting unit.

The first acquiring unit is configured to acquire an input data frame, where the input data frame has a corresponding maximum allowable transmission delay.

The first determining unit is configured to determine, based on a data volume of the input data frame and an initial data transmission parameter for transmitting the input data frame, a first estimated transmission duration of the input data frame.

The first adjusting unit is configured to adjust, in response to the first estimated transmission duration exceeding the maximum allowable transmission delay, the initial data transmission parameter to obtain an adjusted data transmission parameter, where an estimated transmission duration for the input data frame determined based on the adjusted data transmission parameter is a second estimated transmission duration less than the first estimated transmission duration, and the second estimated transmission duration does not exceed the maximum allowable transmission delay.

The transmitting unit is configured to transmit, based on the adjusted data transmission parameter, the input data frame to a receive side for the input data frame.

In a possible implementation, the input data frame is generated by an encoder. The apparatus further includes a second acquiring unit, a second determining unit, a third determining unit, and a second adjusting unit.

The second acquiring unit is configured to acquire respective packet sequence reception duration of a plurality of received packet sequences within a measurement period, where the received packet sequence is an input packet sequence received by the receive side.

The second determining unit is configured to determine, based on the respective packet sequence reception duration and packet sequence lengths of the plurality of received packet sequences, respective data packet reception speeds of the plurality of received packet sequences.

The third determining unit is configured to determine an adjustment bit rate based on the respective data packet reception speeds of the plurality of received packet sequences.

The second adjusting unit is configured to adjust a bit rate for the encoder to the adjustment bit rate, so that the encoder generates the input data frame based on the adjustment bit rate.

In a possible implementation, the third determining unit is specifically configured to:

generate a reception speed distribution parameter based on the respective data packet reception speeds of the plurality of received packet sequences, the reception speed distribution parameter identifying a quantity of received packet sequences in each of a plurality of reception speed ranges having the same range length; and

determine the adjustment bit rate based on a mode range corresponding to the reception speed distribution parameter, where a quantity of received packet sequences in the mode range is greater than quantities of received packet sequences in adjacent reception speed ranges on both sides of the mode range.

In a possible implementation, the reception speed distribution parameter corresponds to only a single mode range, and the third determining unit is specifically configured to:

determine, in response to not acquiring a congestion signal within the measurement period, an average value of data packet reception speeds of the received packet sequences in the mode range as the adjustment bit rate, the congestion signal identifying that an abnormality occurs in a data transmission speed of a data transmission link configured for transmitting the input packet sequence to the receive side; or
determine, in response to acquiring the congestion signal within the measurement period, a difference between the average value and a standard deviation of the data packet reception speeds of the plurality of received packet sequences within the measurement period as the adjustment bit rate.

In a possible implementation, the reception speed distribution parameter corresponds to a plurality of mode ranges, a quantity of the plurality of mode ranges is less than a preset quantity of ranges, and the third determining unit is specifically configured to:

determine, in response to not acquiring a congestion signal within the measurement period, an average value of data packet reception speeds of a plurality of received packet sequences in a first target range as the adjustment bit rate, the first target range being a mode range having a lowest reception speed of the plurality of mode ranges, and the congestion signal identifying that an abnormality occurs in a data transmission speed of a data transmission link configured for transmitting the input packet sequence to the receive side; or

determine, in response to acquiring the congestion signal within the measurement period, a difference between the average value and a standard deviation of data packet reception speeds of a plurality of received packet sequences in a second target range as the adjustment bit rate, the second target range being defined from a right endpoint of a first negative mode range to a left endpoint of a second negative mode range, the first negative mode range being a negative mode range located on a left side of the first target range and closest to the first target range, the second negative mode range being a negative mode range located on a right side of the first target range and closest to the first target range, where a quantity of received packet sequences in each negative mode range is less than quantities of received packet sequences in adjacent reception speed ranges on both sides of the negative mode range.

In a possible implementation, the reception speed distribution parameter corresponds to a plurality of mode ranges, a quantity of the plurality of mode ranges exceeds a preset quantity of ranges, and the apparatus further includes a processing unit.

The processing unit is configured to perform noise smoothing processing on the reception speed distribution parameter, where the noise smoothing processing is used for reducing the quantity of the mode ranges in the reception speed distribution parameter.

The third determining unit is specifically configured to:

determine the adjustment bit rate based on mode ranges corresponding to a reception speed distribution parameter subjected to the noise smoothing processing.

In a possible implementation, a quantity of a plurality of mode ranges corresponding to the reception speed distribution parameter exceeds a preset quantity of ranges, and the third determining unit is specifically configured to:

determine, in response to a quantity of the plurality of received packet sequences within the measurement period being greater than a first preset quantity and not receiving a congestion signal within the measurement period, an average value of data packet reception speeds of a plurality of received packet sequences in a first target range as the adjustment bit rate, the first target range being a mode range having a lowest reception speed of the plurality of mode ranges, and the congestion signal identifying that an abnormality occurs in a data transmission speed of a data transmission link configured for transmitting the input packet sequence to the receive side; and

reduce, in response to receiving the congestion signal within the measurement period, an initial bit rate for the encoder by multiplying a preset ratio to obtain the adjustment bit rate.

In a possible implementation, the adjustment bit rate does not exceed a data transmission speed of a data transmission link, and the data transmission link is configured for transmitting the input packet sequence to the receive side.

In a possible implementation, the adjusted packet sequence length is between a lower limit threshold of the packet sequence length and an upper limit threshold of the packet sequence length, the upper limit threshold of the packet sequence length is determined based on a data transmission speed of a data transmission link and a minimum transmission interval threshold, the data transmission link is configured for transmitting the input packet sequence to the receive side, the packet sequence transmission interval is between the minimum transmission interval threshold and a maximum transmission interval threshold, and the maximum transmission interval threshold is configured for satisfying that a quantity of input packet sequences receivable by the receive side within the measurement period is greater than a preset quantity.

According to a third aspect, an embodiment of this application discloses a computer device, including a processor and a memory.

The memory is configured to store a computer program and transmit the computer program to the processor.

The processor is configured to perform, according to the computer program, the data transmission method according to any one of the implementations of the first aspect.

According to a fourth aspect, an embodiment of this application discloses a computer-readable storage medium, configured to store a computer program, the computer program being configured for performing the data transmission method according to any one of the implementations of the first aspect.

According to a fifth aspect, an embodiment of this application discloses a computer program product including a computer program, the computer program product, when running on a computer, causing the computer to perform the data transmission method according to any one of the implementations of the first aspect.

It can be learned from the foregoing technical solutions that, after the input data frame is obtained, instead of directly transmitting the input data frame to the receive side, the first estimated transmission duration corresponding to the input data frame is first estimated based on the data volume corresponding to the input data frame and the initial data transmission parameter configured for transmitting the input data frame, and whether the first estimated transmission duration exceeds the maximum allowable transmission delay corresponding to the input data frame is determined, and if the first estimated transmission duration exceeds the maximum allowable transmission delay, it means that it is highly likely that transmission for the input data frame cannot be completed within the maximum allowable transmission delay based on the initial data transmission parameter. In this case, the initial data transmission parameter may be automatically adjusted to obtain the adjusted data transmission parameter, and the second estimated transmission duration corresponding to the input data frame determined based on the adjusted data transmission parameter does not exceed the maximum allowable transmission delay. Therefore, the input data frame can be timely transmitted to the corresponding receive side based on the adjusted data transmission parameter. In this application, through real-time and flexible dynamic parameter adjustment, it may be ensured that each input data frame is transmitted timely as much as possible, to avoid real-time communication freezing caused by the receive side not receiving a data frame for a long time, so as to improve real-time communication experience.

BRIEF DESCRIPTION OF THE DRAWINGS

FIG. 1 is a schematic diagram of a data transmission method in an actual application scenario according to an embodiment of this application.

FIG. 2 is a flowchart of a data transmission method according to an embodiment of this application.

FIG. 3 is a schematic diagram of a data transmission method according to an embodiment of this application.

FIG. 4 is a schematic diagram of a data transmission method according to an embodiment of this application.

FIG. 5 is a schematic diagram of a data transmission method according to an embodiment of this application.

FIG. 6 is a schematic diagram of a data transmission method in an actual application scenario according to an embodiment of this application.

FIG. 7 is a block diagram of a structure of a data transmission apparatus according to an embodiment of this application.

FIG. 8 is a diagram of a structure of a terminal according to an embodiment of this application.

FIG. 9 is a diagram of a structure of a server according to an embodiment of this application.

DESCRIPTION OF EMBODIMENTS

The following describes embodiments of this application with reference to the accompanying drawings.

In a real-time communication process, an encoder usually encodes real-time generated to-be-transmitted data to obtain a to-be-transmitted data frame, i.e., an input data frame, and transmits the to-be-transmitted data frame to a receive side. An encoder at the receive side decodes the to-be-transmitted data frame and displays the to-be-transmitted data frame to an object in real-time communication. Because data in real-time communication is transmitted and displayed in real time, if there is a delay in transmitting data to the receive side, freezing may occur in the real-time communication of the object, and real-time communication experience may be poor.

In related art, after obtaining the to-be-transmitted data frame through encoding based on a set bit rate, the encoder may transmit the to-be-transmitted data frame to the receive side based on a fixed data transmission parameter. When a data volume of a data frame is too large or required transmission duration for the data frame is too short, the data frame cannot be transmitted to the receive side timely. Because an exact data volume of each data frame cannot be obtained before encoding, whether the data frame can be transmitted timely before encoding of the data frame is completed cannot be predicted. The encoder may at least obtain a plurality of data frames through buffering and encoding based on a same bit rate. As a result, when a data frame cannot be transmitted timely due to a data volume problem, a bit rate corresponding to a next frame cannot be adjusted immediately to avoid a delay. In other words, adjustment for the bit rate is performed on a plurality of data frames included in a segment of data, and the adjustment cannot be controlled precisely for transmission for each data frame.

Therefore, during adjusting the bit rate of the encoder to improve stability of real-time communication in related art, a data volume of a subsequent data frame is to be reduced or transmission duration is to be prolonged, so that the subsequent data frame can be transmitted timely. According to the adjusting method, a problem of timeout transmission for a single data frame cannot be resolved, and adjusting may be performed only after the problem occurs. Therefore, there is a high possibility of freezing during real-time communication.

To resolve the foregoing technical problems, embodiments of this application provide a data transmission method. According to the method, a data transmission parameter may be adjusted in real time based on a data volume and a maximum allowable transmission delay corresponding to a to-be-transmitted data frame. Therefore, even if a data volume and maximum allowable transmission delay corresponding to a specific to-be-transmitted data frame fluctuate, a processing device may ensure to a certain extent that the to-be-transmitted data frame is transmitted within the maximum allowable transmission delay, so that stability of real-time communication is improved.

The method may be applied to the processing device, which is a processing device that can adjust a parameter, for example, a terminal device or a server having a parameter adjusting function. The method may be performed independently by a terminal device or a server, or may be applied to a network scenario in which the terminal device communicates with the server, and is performed by a collaboration of the terminal device and the server. The terminal device may be a computer, a mobile phone, or another device. The server may be understood as an application server or a Web server. In actual deployment, the server may be a dedicated server or a cluster server.

For ease of understanding the technical solutions provided in embodiments of this application, a data transmission method provided in an embodiment of this application is described below with reference to an actual application scenario.

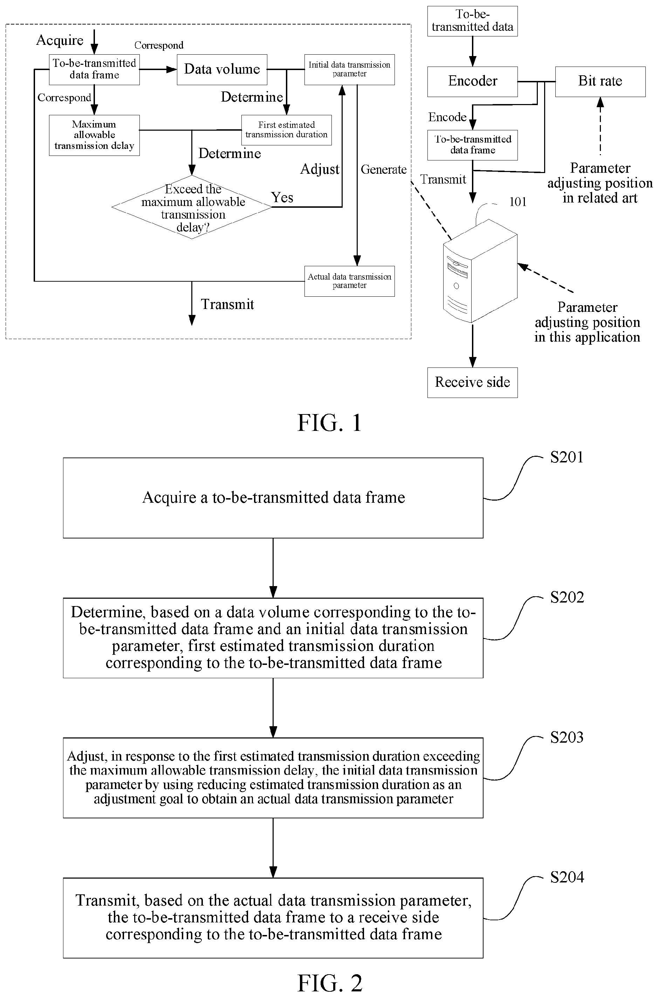

FIG. 1 is a schematic diagram of a data transmission method in an actual application scenario according to an embodiment of this application. In the actual application scenario, a processing device is a server 101 having a data transmission capability.

As shown in the figure, an encoder encodes a to-be-transmitted data based on a bit rate parameter to obtain a to-be-transmitted data frame, and transmits the to-be-transmitted data frame to the server 101 based on the bit rate parameter. In related art, a parameter to be adjusted is a bit rate parameter corresponding to the encoder. It can be learned from analysis of the foregoing problem that, through adjustment for the bit rate parameter, a plurality of data frames corresponding to a section of data are affected, in other words, only this section of data may satisfy a transmission requirement from overall, and because sizes of data frames in data are not the same, it cannot be ensured that each data frame is transmitted timely.

While in this application, parameter adjustment is performed in the server 101 responsible for data frame transmission. After obtaining the to-be-transmitted data frame, the server 101 may determine, based on a data volume corresponding to the data frame and an initial data transmission parameter, first estimated transmission duration corresponding to the to-be-transmitted data frame. The first estimated transmission duration is duration for the server 101 to transmit the to-be-transmitted data frame. The server 101 may determine whether the first estimated transmission duration exceeds the maximum allowable transmission delay corresponding to the to-be-transmitted data frame. If the first estimated transmission duration exceeds the maximum allowable transmission delay, the initial data transmission parameter is adjusted to obtain an actual data transmission parameter, and the actual data transmission parameter satisfies a requirement that second estimated transmission duration for transmitting the to-be-transmitted data frame does not exceed the maximum allowable transmission delay. The server 101 may transmit the to-be-transmitted data frame to a receive side based on the adjusted actual data transmission parameter, so that precise parameter adjustment in a data frame can be implemented, and it is ensured that each data frame can be transmitted timely as much as possible, thereby improving real-time communication experience.

The following describes a data transmission method provided in an embodiment of this application with reference to the accompanying drawings.

FIG. 2 is a flowchart of a data transmission method according to an embodiment of this application. This embodiment is performed by the foregoing processing device. The method includes:

S201: Acquire a to-be-transmitted data frame.

The to-be-transmitted data frame may be a data frame generated by an encoder by encoding to-be-transmitted data, i.e., input data, based on a specific bit rate. The to-be-transmitted data frame has a corresponding maximum allowable transmission delay, and the maximum allowable transmission delay is a maximum transmission duration allowed for the processing device to transmit the to-be-transmitted data frame to a receive side. In other words, to ensure smoothness of data transmission in real-time communication, the processing device needs to complete transmission of the to-be-transmitted data frame to the receive side within the maximum allowable transmission delay.

Generally, the maximum allowable transmission delay is determined based on a real-time communication (RTC for short) delay and a frame rate. The frame rate is a frame rate at which the encoder encodes and outputs data.

A calculation formula for the maximum allowable transmission delay is as follows:

$$\text{Maximum allowable transmission delay} = \text{RTC delay} - \frac{1}{\text{frame rate}}$$

For example, for a video with a frame rate of 30 fps and an RTC delay of 50 ms, an maximum allowable transmission delay for each data frame is 50 ms minus 1s/30.

Different data types may correspond to different data frame types. For example, when the to-be-transmitted data is video data, the to-be-transmitted data frame may be a video frame. When the to-be-transmitted data is audio data, the to-be-transmitted data frame may be an audio frame.

S202: Determine, based on a data volume corresponding to the to-be-transmitted data frame and an initial data transmission parameter, first estimated transmission duration corresponding to the to-be-transmitted data frame.

A data transmission parameter is configured for transmitting the to-be-transmitted data frame. To be specific, the processing device completes transmission for the to-be-transmitted data frame in a transmission manner or a transmission frequency identified by the data transmission parameter. The data transmission parameter determines a transmission speed of the to-be-transmitted data frame. Transmission duration for the to-be-transmitted data frame may be changed by adjusting the data transmission parameter.

In related art, because only a bit rate of the encoder is adjusted, and the encoder generally obtain a plurality of data frames through encoding based on the same bit rate, through bit rate adjustment, it can only be ensured that transmission of a section of data satisfies a transmission requirement in overall, for example, it is ensured that transmission of a plurality of data frames within a time period can be completed as much as possible. However, volumes of data distributed in a plurality of data frames included in data are usually different. For example, for video data, due to different picture complexity of different video frames, data volumes of the video frames may be different.

Therefore, when the data transmission parameter is fixed, transmission duration corresponding to data frames having different data volumes is different. As a result, a part of data frames having large data volumes cannot be transmitted timely, causing a receive side to be unable to receive the part of data frames timely. In addition, because the encoder needs to obtain a plurality of data frames through encoding based on the same bit rate, when a data frame does not satisfy a requirement of the maximum allowable transmission delay when the data frame is transmitted, the encoder cannot adjust other data frames corresponding to the bit rate, but can only adjust the bit rate when encoding a next batch of data frames. As a result, transmission of each data frame cannot be managed effectively in a bit rate-based adjusting manner, and a time lag is large.

To adjust each data frame effectively, so as to use a data transmission bandwidth effectively, in this application, the processing device may dynamically adjust the data transmission parameter based on a maximum allowable transmission delay and a data volume corresponding to each data frame, so that each data frame can be transmitted within the maximum allowable transmission delay.

After obtaining the to-be-transmitted data frame, the processing device may detect the data volume corresponding to the to-be-transmitted data frame, and determine, based on the data volume and the initial data transmission parameter, the first estimated transmission duration corresponding to the to-be-transmitted data frame. The initial data transmission parameter is a data transmission parameter corresponding to the processing device before parameter adjustment, and is a data transmission parameter for transmitting the to-be-transmitted data frame. The first estimated transmission duration is duration required for the processing device to transmit the to-be-transmitted data frame to the receive side based on the initial data transmission parameter.

S203: Adjust, in response to the first estimated transmission duration exceeding the maximum allowable transmission delay, the initial data transmission parameter by using reducing estimated transmission duration as an adjustment goal to obtain an actual data transmission parameter.

The processing device may determine whether the first estimated transmission duration exceeds the maximum allowable transmission delay. If the first estimated transmission duration exceeds the maximum allowable transmission delay, it means that data frame cannot be transmitted timely within the maximum allowable transmission delay based on the initial data transmission parameter. In this case, the processing device may adjust the initial data transmission parameter to obtain an actual data transmission parameter (or alternatively referred to as adjusted data transmission parameter). The estimated transmission duration for the to-be-transmitted data frame determined based on the actual data transmission parameter is second estimated transmission duration, and the second estimated transmission duration does not exceed the maximum allowable transmission delay. In other words, the second estimated transmission duration is transmission duration required for the processing device to transmit the to-be-transmitted data frame based on the actual transmission parameter. It can be learned that the data transmission parameter is adjusted from the initial data transmission parameter to the actual data transmission parameter through adjustment for the data transmission parameter, so that the estimated transmission duration is shortened from the first estimated transmission duration to the second estimated transmission duration.

The processing device corresponds to only one data transmission parameter, and the initial data transmission parameter and the actual data transmission parameter are respectively data transmission parameters before and after adjustment. The data transmission parameter corresponding to transmission of the to-be-transmitted data frame may be directly used as an initial data transmission parameter in a parameter adjustment process of a next to-be-transmitted data frame. The processing device may also set a data transmission parameter as a default initial data transmission parameter, and adjust a corresponding data transmission parameter back to the default initial data transmission parameter after each to-be-transmitted data frame is transmitted. This is not limited herein.

S204: Transmit, based on the actual data transmission parameter, the to-be-transmitted data frame to a receive side corresponding to the to-be-transmitted data frame.

Because the processing device may complete transmission of the to-be-transmitted data frame within the maximum allowable transmission delay based on the actual data transmission parameter, it may be ensured to a certain extent that the to-be-transmitted data frame can be transmitted to the receive side timely. The receive side is a receive side that needs to receive the to-be-transmitted data frame for real-time communication.

It can be learned from the foregoing technical solutions that, after the to-be-transmitted data frame is obtained, instead of directly transmitting the to-be-transmitted data frame to the receive side, the first estimated transmission duration corresponding to the to-be-transmitted data frame is first estimated based on the data volume corresponding to the to-be-transmitted data frame and the initial data transmission parameter configured for transmitting the to-be-transmitted data frame, and whether the first estimated transmission duration exceeds the maximum allowable transmission delay corresponding to the to-be-transmitted data frame is determined, and if the first estimated transmission duration exceeds the maximum allowable transmission delay, it means that it is highly likely that transmission for the to-be-transmitted data frame cannot be completed within the maximum allowable transmission delay based on the initial data transmission parameter. In this case, the initial data transmission parameter may be automatically adjusted to obtain the actual data transmission parameter, and the second estimated transmission duration corresponding to the to-be-transmitted data frame determined based on the actual data transmission parameter does not exceed the maximum allowable transmission delay. Therefore, the to-be-transmitted data frame can be timely transmitted to the corresponding receive side based on the actual data transmission parameter. In this application, through real-time and flexible dynamic parameter adjustment, it may be ensured that each to-be-transmitted data frame is transmitted timely as much as possible, to avoid real-time communication freezing caused by the receive side not receiving a data frame for a long time, so as to improve real-time communication experience.

There may be a plurality of specific forms of the data transmission parameter. The following mainly describes the data transmission parameter in data packet sequence transmission.

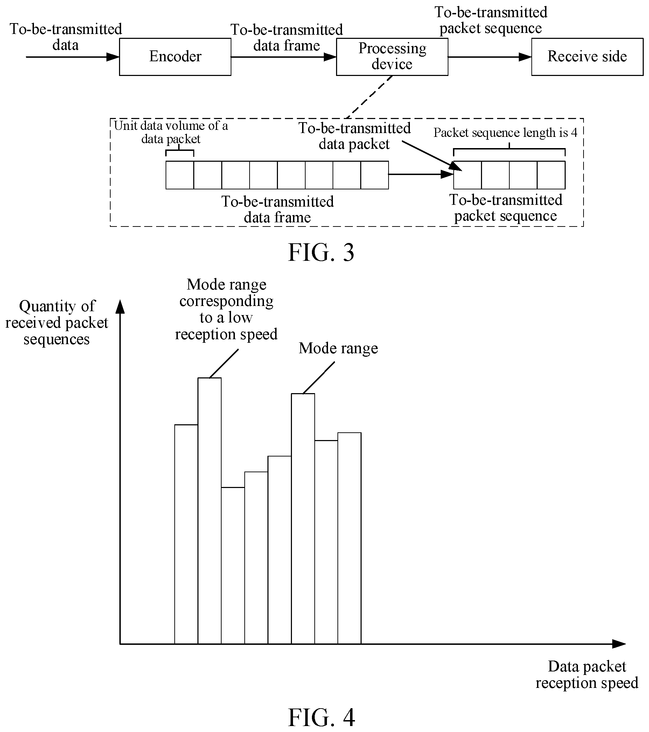

In a possible implementation, the data transmission parameter includes a packet sequence length and a packet sequence transmission interval. The packet sequence length is configured for identifying a quantity of to-be-transmitted data packets included in each packet sequence when a to-be-transmitted data packet is transmitted in packet sequence, and the to-be-transmitted data packet is obtained by splitting the to-be-transmitted data frame based on a unit data volume of a data packet. The packet sequence transmission interval refers to an interval between transmission time of two packet sequences when the processing device transmits a packet sequence to the receive side. The unit data volume of a data packet refers to a unit data volume corresponding to each data packet when a data frame is split into data packets, and is generally a default value. The data packet may be, for example, a user datagram protocol (UDP for short) data packet. To be specific, as shown in FIG. 3, during data transmission, the to-be-transmitted data is first encoded by the encoder to obtain the to-be-transmitted data frame, and then the to-be-transmitted data frame is transmitted to the processing device. The processing device splits the to-be-transmitted data frame into a plurality of to-be-transmitted data packets based on the unit data volume of the data packet, and then determines a plurality of to-be-transmitted packet sequences, i.e., input packet sequences, based on the packet sequence length. For example, when the packet sequence length in the figure is 4, the processing device may arrange four adjacent to-be-transmitted data packets in the data into one to-be-transmitted packet sequence.

When determining the first estimated transmission duration, the processing device may determine, based on the data volume corresponding to the to-be-transmitted data frame, the unit data volume of the data packet, an initial packet sequence length, and an initial packet sequence transmission interval, the first estimated transmission duration corresponding to the to-be-transmitted data frame. The processing device may determine, based on the data volume corresponding to the to-be-transmitted data frame and the unit data volume of the data packet, a quantity of to-be-transmitted data packets corresponding to the to-be-transmitted data frame, and may determine, based on the quantity of to-be-transmitted data packets and the initial packet sequence length, a quantity of packet sequences corresponding to the to-be-transmitted data frame, and then determine, based on the quantity of packet sequences and the initial packet sequence transmission interval, duration required for transmitting these data packet sequences, namely, the first estimated transmission duration. When the data packet is transmitted in a packet sequence, transmission moments corresponding to a plurality of data packets in the same packet sequence are the same.

In implementations, the first estimated transmission duration is determined based on the following formula:

$$T = \frac{D\delta}{ML}$$

T is the first estimated transmission duration, D is the data volume of the data frame, L is the initial packet sequence length, $\delta$ is the initial packet sequence transmission interval, and M is the unit data volume of the data packet.

If the processing device determines that the first estimated transmission duration exceeds the maximum allowable transmission delay, the processing device may adjust the initial packet sequence length and/or the initial packet sequence transmission interval, so that a corresponding actual packet sequence length (or alternatively referred to as adjusted packet sequence length) and actual packet sequence transmission interval after adjustment (or alternatively referred to as adjusted packet sequence transmission interval) satisfy that the determined second estimated transmission duration does not exceed the maximum allowable transmission delay, wherein the second estimated transmission duration is calculated according to the above-identified formula for the first estimated transmission duration, with the actual packet sequence length and actual packet sequence transmission interval after adjustment in replacement of the initial packet sequence length and initial packet sequence transmission interval in the formula. The processing device may adjust any one or more of the initial packet sequence length and the initial packet sequence transmission interval during adjustment. Therefore, at most one of the actual packet sequence length or the actual packet sequence transmission interval in the actual data transmission parameter may be the same as the initial packet sequence length or the initial packet sequence transmission interval.

When transmitting the data based on the actual data transmission parameter, the processing device may first split the to-be-transmitted data frame based on the unit data volume of the data packet to obtain the plurality of to-be-transmitted data packets corresponding to the to-be-transmitted data frame, and a data volume of each to-be-transmitted data packet is a unit data volume of the data packet. Then, the processing device may generate the plurality of to-be-transmitted packet sequences corresponding to the plurality of to-be-transmitted data packets based on the actual packet sequence length in the actual data transmission parameter, each to-be-transmitted packet sequence includes a to-be-transmitted data packet, and a quantity of the to-be-transmitted data packets corresponds to the actual packet sequence length. If a quantity of data packets corresponding to the to-be-transmitted data frame is not an integer multiple of the actual packet sequence length, a quantity of to-be-transmitted data packets in a to-be-transmitted packet sequence may not reach the packet sequence length, and the processing device may further transmit the to-be-transmitted packet sequence as a separate to-be-transmitted packet sequence.

The processing device may transmit the plurality of to-be-transmitted packet sequences to the receive side based on the actual packet sequence transmission interval in the actual data transmission parameter, so that when the plurality of to-be-transmitted packet sequences corresponding to the to-be-transmitted data frame are all transmitted, consumed duration does not exceed the maximum allowable transmission delay, and the to-be-transmitted data frame can be transmitted timely.

The foregoing parameter adjustment is mainly real-time dynamic parameter adjustment for transmission of each data frame, to ensure that each data frame is transmitted without exceeding the maximum allowable transmission delay as much as possible. The data volume and the maximum allowable transmission delay of the data frame are related to the bit rate at which the encoder encodes the data to obtain the data frame. For example, a calculation formula for the bit rate is as follows:

$$\text{Bit rate} = \text{data volume of a data frame} \times \text{frame rate}$$

The maximum allowable transmission delay is closely related to the frame rate, and the bit rate may identify an output speed at which the encoder outputs data. Although in the foregoing method, it can be ensured that each frame is transmitted timely as much as possible, if for the data volume and maximum allowable transmission delay of the data frame, there is a large difference between a data bandwidth required in the data transmission process and a data bandwidth in an actual transmission process. In other words, the speed at which the encoder outputs the data differs greatly from a data bandwidth in the data transmission process. Although the processing device can transmit the frame timely based on the foregoing parameter adjustment process, a transmission speed in the transmission process is low, the receive side cannot receive the data output by the encoder timely, and there is still a specific probability of causing real-time communication freezing.

In view of this, in this embodiment of this application, to further improve stability of real-time communication, the processing device may further adjust, based on an actual reception status of the receive side, the bit rate at which the encoder encodes data, so that it is ensured that the receive side can receive the to-be-transmitted data timely.

In a possible implementation, the to-be-transmitted data frame is generated through encoding by the encoder based on an initial bit rate. The processing device may obtain the to-be-transmitted data frame generated by the encoder based on the initial bit rate, and may accurately obtain the data volume corresponding to the to-be-transmitted data frame and the maximum allowable transmission delay corresponding to the to-be-transmitted data frame.

In a case that the to-be-transmitted data frame is generated by the encoder, the processing device may preset a measurement period. The measurement period is a period for measuring a data reception speed of the receive side. The processing device may acquire packet sequence reception duration respectively corresponding to a plurality of received packet sequences within the measurement period. The received packet sequence is a to-be-transmitted packet sequence received by the receive side. The received packet sequence here may include the to-be-transmitted packet sequence of the to-be-transmitted data frame transmitted by the foregoing processing device, and may also include a to-be-transmitted packet sequence of another to-be-transmitted data frame.

When the data is transmitted in the form of a packet sequence, the receive side may learn that which data packets are in the same packet sequence. Therefore, the receive side may record duration for receiving a packet sequence and a quantity of corresponding data packets in the packet sequence. For example, the processing device may record a transmission moment corresponding to each to-be-transmitted data packet when transmitting the to-be-transmitted packet sequence. Because transmission moments corresponding to a plurality of to-be-transmitted data packets in the same packet sequence are the same, it can be determined, by recording the data, that which to-be-transmitted data packets are in the same packet sequence, and this information may be notified to the receive side. Alternatively, the receive side may feed a reception moment for each data packet back, and a transmit end may calculate reception duration of the same packet sequence. This is not limited herein.

Therefore, the processing device may determine, based on packet sequence reception duration and packet sequence lengths respectively corresponding to the plurality of received packet sequences, data packet reception speeds respectively corresponding to the plurality of received packet sequences. For example, the data packet reception speed is a ratio of the packet sequence reception duration corresponding to the received packet sequence to the actual packet sequence length. The data packet reception speed is an actual speed at which the receive side receives the transmitted data. Therefore, to avoid reduction in real-time communication quality due to a packet loss caused by a large difference between the reception speed of the receive side and a bandwidth requirement of the encoder to generate data, the processing device may determine a adjustment bit rate based on the data packet reception speeds respectively corresponding to the plurality of received packet sequences. The adjustment bit rate is close to an actual reception speed of the receive side.

The processing device may adjust a bit rate corresponding to the encoder to the adjustment bit rate, so that the encoder generates the to-be-transmitted data frame based on the adjustment bit rate. As mentioned above, the bit rate determines the data volume and frame rate of the data frame, and the frame rate determines the maximum allowable transmission delay. Therefore, the bit rate determines a transmission bandwidth required for effective transmission of the data frame in real-time communication. Therefore, the bit rate is adjusted based on the actual reception speed of the receive side, so that the receive side can timely receive a plurality of to-be-transmitted data frames generated by the encoder based on an adjusted bit rate, thereby improving stability of real-time communication.

As mentioned above, adjustment for a bit rate parameter of the encoder is actually to adjust an encoding process for a plurality of data frames by the encoder, while adjustment for the data transmission parameter is to dynamically adjust the transmission of each data frame in real time. Therefore, these two parameter adjusting manners are combined, so that a data output speed at which the encoder encodes and outputs the to-be-transmitted data within a time period matches an actual data transmission speed, and each data frame can be transmitted to the receive side timely. In addition, because through the adjustment of the bit rate, a plurality of data frames may match an actual transmission bandwidth in overall, and the data volume and maximum allowable transmission delay determined by the bit rate determine adjustment for the data transmission parameter by the processing device, in the combination of these two manners, the adjustment for the data transmission parameter may not have a significant impact on the data transmission bandwidth to a certain extent, so that a data transmission bandwidth resource is fully used.

There are a plurality of manners for analyzing the reception speed of the received packet sequence to determine the adjustment bit rate.

In a possible implementation, the processing device may generate a reception speed distribution parameter based on the data packet reception speeds respectively corresponding to the plurality of received packet sequences. The reception speed distribution parameter is configured for identifying a quantity of received packet sequences respectively distributed in a plurality of reception speed ranges having the same range length. In other words, the processing device may arrange the reception speed based on a specific reception speed interval, such as 100 kbps, to obtain a plurality of reception speed ranges having the same range length, then determine, based on the data packet reception speed corresponding to each received packet sequence, which reception speed range the received packet sequence is to be arranged into, so that the reception speed distribution parameter is obtained.

The processing device may determine the adjustment bit rate based on a mode range corresponding to the reception speed distribution parameter. The mode range is a reception speed range of a plurality of reception speed ranges, in which a quantity of received packet sequences distributed is greater than quantities of received packet sequences distributed in adjacent reception speed ranges on both sides of the reception speed range. In other words, the mode ranges are part of ranges having a largest quantity of received packet sequences distributed. When a quantity of received packet sequences in a specific reception speed range is large, it means that most of the data packets in the measurement period are received at a data packet reception speed corresponding to the range. In other words, the data packet reception speed corresponding to the reception speed range is close to an actual data packet reception speed of the receive side in most cases. Therefore the reception speed range is a worth referring to. A reception speed range having a small quantity of distributed received packet sequences is usually caused by a transmission speed fluctuation. Therefore the reception speed range is not worth referring to. In view of this, the processing device determines the adjustment bit rate based on the mode range, so that the adjustment bit rate may be close to the actual reception speed of the receive side, and therefore the data frame generated through encoding may be transmitted timely, thereby improving the real-time communication quality.

In different data transmission cases, a quantity of mode ranges measured by the processing device may be different. During transmission of data in the form of a packet sequence, a plurality of to-be-transmitted data packets may be transmitted at a same moment, which may be considered as a "microburst" in the transmission. The microburst refers to that a port transmits a large amount of data continuously in a very short time period (millisecond level). Duration for a typical microburst is generally between 1-100 milliseconds, so that an instantaneous burst rate reaches dozens of times an average rate, or even exceeds a port bandwidth.

Generally, for a network device, a traffic shaping algorithm may be used to limit different traffic from occupying too many bandwidths. A typical function of traffic shaping is to limit traffic and burst of a specific connection out of a specific network, so that this type of packet is transmitted out at a uniform speed. The traffic shaping algorithm is generally implemented according to a leaky bucket algorithm and a token bucket algorithm.

The leaky bucket algorithm restricts an output rate as a constant regardless of burstiness of an input data stream. When null is input, no action is performed according to the algorithm. A host injects a data packet into a network in each time slice, then a consistent data stream is generated, and burst traffic is smoothed. If amount of data buffered based on the leaky bucket algorithm exceeds a maximum data volume limit, excess data packets may be discarded.

The token bucket algorithm is configured for controlling an amount of data transmitted to the network and allow burst data to be transmitted. A token bucket having a fixed size may generate tokens continuously at a constant rate. If the tokens are not consumed, or a consumption rate is lower than a generation rate, the tokens may be increased continuously until the bucket is full. Tokens generated later may overflow from the bucket. A maximum quantity of tokens that can be stored in the bucket finally may never exceed a size of the bucket. Data packets transmitted to the token bucket consume the tokens. Data packets of different sizes consume different quantities of tokens.

When a traffic shaping algorithm of a bottleneck link in the network is the leaky bucket algorithm, a reception rate of a microburst is limited by a routing forwarding speed and follows Poisson distribution. When a quantity of microbursts is large, Poisson distribution degenerates into Gaussian distribution. In other words, a reception speed distribution parameter of the microburst is a spindle-shaped function having a mode range. In this case, a method of maximum likelihood for Gaussian distribution may be used to estimate a probability that the bit rate is greater than an actual bandwidth. Generally, the probability that the bit rate is greater than the actual bandwidth is approximately 50%.

When the traffic shaping algorithm of the bottleneck link in the network is the token bucket algorithm, the microburst is limited by both a token generation speed of the token bucket and an actual routing forwarding speed. When the tokens are not used up, a reception speed distribution parameter of the microburst is consistent with the leaky bucket algorithm, a mode range is generated in the reception speed distribution parameter. When the tokens are used up, a microburst speed is limited by the token generation speed, and another mode range is generated in the reception speed distribution parameter, which is generally a small mode range. In this case, the method of maximum likelihood for Gaussian distribution may be used to estimate a probability of the small mode range, so that an obtained bit rate does not exceed, as much as possible, the actual bandwidth reflected by the data packet received by the receive side. Therefore, statistical data of the small mode range and surrounding adjacent ranges is used to calculate an appropriate bit rate, so that a probability that the bit rate is greater than a token speed is low.

It can be learned that, in a normal bandwidth transmission case, the reception speed distribution parameter generally includes only 1 to 2 mode ranges. For different quantities of mode ranges, specific manners in which the processing device determines the adjustment bit rate may be different.

In addition, because a network fluctuation may occur during data transmission, an abnormality occurs in a data transmission speed corresponding to a data transmission link configured for transmitting the data packet sequence. In this case, a speed at which the receive side receives the data packet may be reduced to a low speed value. If an abnormality occurs within the measurement period, the data packet reception speed measured by the processing device includes a reception speed caused by a normal part of the transmission speed and a reception speed caused by an abnormal part of the transmission speed. In this case, reliability of the reception speed distribution parameter may be reduced.

For example, when a data transmission speed is in a normal state for most of time in the measurement period and in an abnormal state for a small part of the time, a corresponding data packet reception speed in the mode range may still be high. However, due to the abnormal state, a possibility that an abnormality occurs in subsequent data transmission is high. If the bit rate is adjusted based on the data packet reception speed in the mode range, there is a certain probability that the bit rate does not match the transmission speed in an abnormal case.

In view of this, to further improve appropriateness of the bit rate adjustment, the processing device can not only adjust a parameter based on different quantities of mode ranges, but also adjust a parameter based on whether a congestion signal is acquired within the measurement period. The congestion signal is configured for identifying that an abnormality occurs in data transmission speed corresponding to a data transmission link configured for transmitting the to-be-transmitted packet sequence to the receive side. The congestion signal may be generated based on feedback for the receive side receiving data. For example, the congestion signal may be generated based on a packet loss status, a queue delay growth rate, and a change in a maximum bandwidth-delay product at the receive side. This is already in related art and is not described in detail herein.

In a possible implementation, the reception speed distribution parameter corresponds to only a single mode range. In other words, the leaky bucket algorithm is most probably used to process microburst transmission during data transmission.

In this case, the processing device may determine, in response to not acquiring the congestion signal within the measurement period, an average value of data packet reception speeds corresponding to a plurality of received packet sequences distributed in the mode range as the adjustment bit rate. Because when there is only one mode range, distribution of the received packet sequences in a data packet reception speed dimension generally follows Gaussian distribution. Therefore, there may be a great probability (50%) that the adjustment bit rate does not exceed the data reception speed at the receive side by using the average value of the data packet reception speeds as the adjustment bit rate. Instead of the average value, a median of the data packet reception speeds corresponding to the plurality of received packet sequences distributed in the mode range may alternatively be used as the adjustment bit rate. An effect is similar to that of the average value and is not limited herein.

In response to acquiring the congestion signal within the measurement period, it indicates that an abnormality occurs in the data transmission bandwidth within the measurement period. In this case, reliability of the reception speed distribution parameter determined by the processing device is reduced. To ensure effectiveness of the bit rate adjustment, the processing device may reduce the adjustment bit rate determined in a case that no congestion signal is acquired, so that it is ensured as much as possible that a reception delay at the receive side may not be caused by the adjustment bit rate. For example, the processing device may determine a difference between the foregoing average value (to be specific, the average value of the data packet reception speeds corresponding to the plurality of received packet sequences distributed in the mode range) and a standard deviation of the data packet reception speeds corresponding to the plurality of received packet sequences within the measurement period as the adjustment bit rate, and a calculation formula is as follows:

$$R = u_m - \sqrt{v}$$

R is the adjustment bit rate, v is a variance of the data packet reception speeds corresponding to plurality of received packet sequences within the measurement period, and $u_m$ is the average value of the data packet reception speeds corresponding to the plurality of received packet sequences distributed in the mode range. Through experimental testing, there is an 84% probability that the reception delay at the receive side may not be caused by the adjustment bit rate obtained according to the data transmission method.

In a possible implementation, the reception speed distribution parameter corresponds to a plurality of mode ranges, a quantity of the plurality of mode ranges is less than a preset quantity of ranges, and the preset quantity of ranges may be flexibly adjusted based on actual needs. For example, when only the leaky bucket algorithm and the token bucket algorithm are used, the quantity of mode ranges obtained in a normal case is to be one or two, so that the preset quantity of ranges may be set to two. The preset quantity of ranges is configured for measuring effectiveness of the reception speed distribution parameter determined by the processing device. When the quantity of mode ranges corresponding to the reception speed distribution parameter is more the preset quantity of ranges, it means that a transmission bandwidth fluctuation reflected by the reception speed distribution parameter is serious, and the processing device needs to greatly adjust the bit rate.

The processing device may determine, in response to not acquiring the congestion signal within the measurement period, an average value of data packet reception speeds corresponding to a plurality of received packet sequences distributed in a first target range as the adjustment bit rate, so that bit rate adjustment may be performed based on the restriction of a low transmission speed, so that the adjusted bit rate may satisfy various constraints as much as possible. The first target range is a mode range corresponding to a lowest reception speed of the plurality of mode ranges.

FIG. 4 shows a possibility of the reception speed distribution parameter in a form of a histogram.

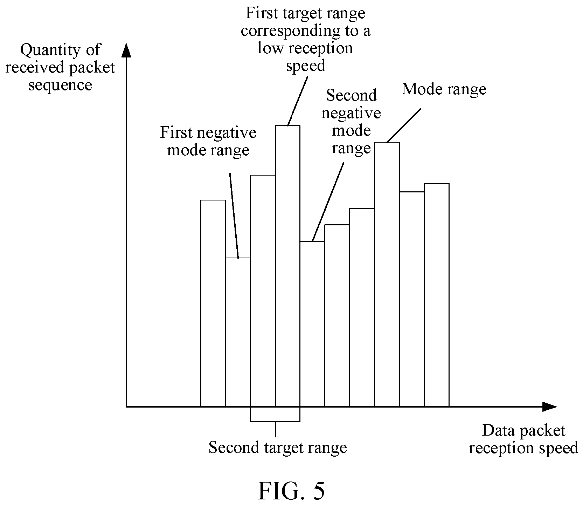

The processing device may determine, in response to acquiring the congestion signal within the measurement period, a difference between the average value (to be specific, the average value of the data packet reception speeds corresponding to the plurality of received packet sequences distributed in the first target range corresponding to the lowest reception speed of the plurality of mode ranges) and a standard deviation of data packet reception speeds corresponding to a plurality of received packet sequences distributed in a second target range as the adjustment bit rate. The second target range is obtained by partitioning using a right endpoint of a first negative mode range and a left endpoint of a second negative mode range as endpoints of the second target range, the first negative mode range is a negative mode range located on a left side of the first target range and closest to the first target range, and the second negative mode range is a negative mode range located on a right side of the first target range and closest to the first target range. The negative mode range is a reception speed range of the plurality of reception speed ranges, in which a quantity of received packet sequences distributed is less than quantities of received packet sequences distributed in adjacent reception speed ranges on both sides of the reception speed range. In other words, data of the second target range near the first target range is close to the data of the first target range. A transmission restriction on the received packet sequences distributed in the second target range is close to a transmission restriction on the received packet sequences distributed in the first target range. Therefore, the bit rate adjustment may be intensified based on a transmission speed of the second target range. FIG. 5 shows a possibility of the reception speed distribution parameter in a form of a histogram.

In a possible implementation, because parameters acquired by the processing device may include noise parameters, these noise parameters may affect the quantity of mode ranges in the reception speed distribution parameter, and the bit rate adjustment may be interfered. In view of this, to further improve accuracy of the bit rate adjustment, when the reception speed distribution parameter corresponds to a plurality of mode ranges, and a quantity of the plurality of mode ranges exceeds a preset quantity of ranges, the processing device may perform noise smoothing processing on the reception speed distribution parameter. The noise smoothing processing is used for reducing an impact of noise data in overall data, and reducing the quantity of mode ranges in the reception speed distribution parameter. The processing device may determine the adjustment bit rate based on mode ranges corresponding to a reception speed distribution parameter subjected to the noise smoothing processing.

In a possible implementation, a quantity of a plurality of mode ranges corresponding to the reception speed distribution parameter exceeds a preset quantity of ranges, it means that a transmission bandwidth fluctuation reflected by the reception speed distribution parameter is serious, and the processing device needs to greatly adjust the bit rate.

In this case, the processing device may first determine whether sufficient data is counted within the measurement period. When the quantity of received packet sequences is large, a quantity of received packet sequences distributed in each mode range is large, and the reception speed distribution parameter has a certain effectiveness, so that the processing device may determine the adjustment bit rate based on the reception speed distribution parameter.

The processing device may preset a first preset quantity. The first preset quantity is configured for determining whether the quantity of received packet sequences in the reception speed distribution parameter is sufficient in a case that there are a plurality of mode ranges. The processing device may determine, in response to a quantity of the plurality of received packet sequences within the measurement period being greater than the first preset quantity and not receiving the congestion signal within the measurement period, an average value of data packet reception speeds corresponding to a plurality of received packet sequences distributed in a first target range as the adjustment bit rate. The first target range is a mode range corresponding to a lowest reception speed of the plurality of mode ranges.

In response to receiving the congestion signal within the measurement period, it indicates that the reception speed distribution parameter reflects a large fluctuation in a current transmission bandwidth in both the quantity of mode ranges and a transmission bandwidth. In this case, the processing device may directly reduce an initial bit rate corresponding to the encoder by multiplying a preset ratio to obtain the adjustment bit rate. The preset ratio is used for bit rate adjustment with great strength, and for example, the preset ratio may be set to 0.75. The initial bit rate is a bit rate corresponding to the encoder before the bit rate adjustment.

In a possible implementation, alternatively, the processing device may directly obtain a data transmission speed corresponding to a data transmission link in a manner of bandwidth detection or the like. The data transmission link is configured for transmitting the to-be-transmitted packet sequence to the receive side. The data transmission speed is determined based on an actual data transmission speed in the data transmission link, configured for limiting a speed at which the processing device transmits a packet sequence, and may be different from the actual data transmission speed in the data transmission link. To further improve appropriateness of the bit rate adjustment, the processing device may limit the adjustment bit rate not to exceed the data transmission speed corresponding to the data transmission link, so that a speed at which the encoder outputs data matches a transmission speed at which the processing device transmits the data, thereby further ensuring that a data frame output by the encoder can be transmitted timely. In addition, the processing device may limit the data transmission speed not to exceed the actual data transmission speed corresponding to the data link. Therefore, combined with the foregoing data transmission manners, the processing device may adjust the data transmission process of the entire real-time communication from four dimensions: encoding, sending, transmission, and receiving, so that stability of real-time communication transmission is improved.

Because in the foregoing bit rate adjustment process, a reception status of the packet sequence at the receive side needs to be analyzed, when the packet sequence length is too small, the data packet reception speed at the receive side determined by the processing device fluctuates greatly, and it is difficult to obtain an effective reception speed distribution parameter of the data packet. When the receive side does not receive sufficient data packet sequences within the measurement period, effectiveness of the reception speed distribution parameter may be low due to a small quantity of data packet sequences. Therefore, in a possible implementation, to ensure effectiveness of the bit rate adjustment, the processing device may limit the packet sequence length and the packet sequence transmission interval in the data transmission parameter.

The actual packet sequence length is between a lower limit threshold of the packet sequence length and an upper limit threshold of the packet sequence length. The upper limit threshold of the packet sequence length is determined based on a data transmission speed corresponding to a data transmission link and a minimum transmission interval threshold. The lower limit threshold of the packet sequence length is configured for ensuring that each packet sequence has enough data packets to analyze the data packet reception speed, to reduce fluctuation of the data packet reception speed, so that the reception speed distribution parameter can express the reception speed of the receive side more accurately. The upper limit threshold of the packet sequence length is configured for limiting a transmission speed to a certain extent when the processing device transmits a packet sequence, so that the transmission speed does not exceed the transmission speed in the data transmission link as much as possible. As mentioned above, the data transmission speed does not exceed the actual data transmission speed corresponding to the data link.

It can be learned from the following formula that the data transmission speed at which the processing device transmits a packet sequence is related to the packet sequence length and the packet sequence transmission interval:

$$V = \frac{L}{\delta}$$

$V$ is a speed at which the processing device transmits data, $L$ is the packet sequence length, $\delta$ is the packet sequence transmission interval, and $\frac{1}{\delta}$ is a quantity of packet sequences that can be transmitted within 1s. Therefore, the speed $V$ can be obtained by multiplying the packet sequence length and the quantity of packet sequences that can be transmitted within 1s. Therefore, the processing device may determine an upper limit of $L$ based on a minimum value of $\delta$ and a link bandwidth $S$, as shown in the following formula:

$$S = \frac{L_{max}}{\delta_{min}}$$

$L_{max}$ is the upper limit threshold of the packet sequence length, $\delta_{min}$ is the minimum transmission interval threshold, and the minimum transmission interval threshold is set to avoid interference to a real-time communication system caused by too frequent packet sequence transmission. Therefore, the actual data transmission speed is allowed not to exceed the data transmission speed $S$ as much as possible within a possible value range of $\delta$. As mentioned above, at an instantaneous rate, for example, an instantaneous rate at which a specific packet sequence is transmitted may exceed the data transmission speed. Therefore, in actual application, the processing device may increase a set value of $S$, which does not exceed a value of the actual transmission speed of the data transmission link, to adjust transmission of instantaneous data, and the value of $S$ may still be close to the actual transmission speed in overall. For the instantaneous transmission rate exceeding the data transmission speed, bandwidth resources that are not used when another instantaneous data transmission speed is low are actually fully used.

The packet sequence transmission interval is between the minimum transmission interval threshold and a maximum transmission interval threshold. The maximum transmission interval threshold is configured for satisfying that a quantity of to-be-transmitted packet sequences receivable by the receive side within the measurement period is greater than a preset quantity. The preset quantity is a sufficient quantity of data packet sequences required for bit rate adjustment based on the data packet reception speed at the receive side. As shown in the following formula:

$$\frac{W}{\delta_{max}} \geq n$$

W is the measurement period, n is the preset quantity, and $\delta_{max}$ is the maximum transmission interval threshold. A minimum transmission frequency F may be set based on the reception status at the receive side. F is generally between 5 HZ to 20 Hz. $\delta_{max} = \frac{1}{F}$ W may be 10 $\delta_{max}$. To be specific, it is ensured that the receive side may receive 10 packet sequences in one measurement period.

It can be learned from this parameter limit scope that, in this application, requirements in two dimensions of single frame transmission duration and a data transmission speed may be balanced. In addition, data obtained through statistics from the receive side may be used to effectively adjust the bit rate.

The data transmission speed corresponding to the foregoing data transmission link may be a speed obtained in the bandwidth detection manner, for example, may be a speed estimated by a bandwidth estimation module. This speed may be different from a bandwidth actually corresponding to the data transmission link, and is configured for limiting adjustment of parameters such as the packet sequence length and the bit rate. The foregoing data transmission speed is the actual transmission speed corresponding to the data link. When adjusting the data transmission speed, the processing device may limit the data transmission speed not to exceed the transmission speed actually corresponding to the data transmission link, to ensure a success rate of data transmission.

For ease of understanding the technical solutions provided in embodiments of this application, a data transmission method provided in an embodiment of this application is described below with reference to an actual application scenario.

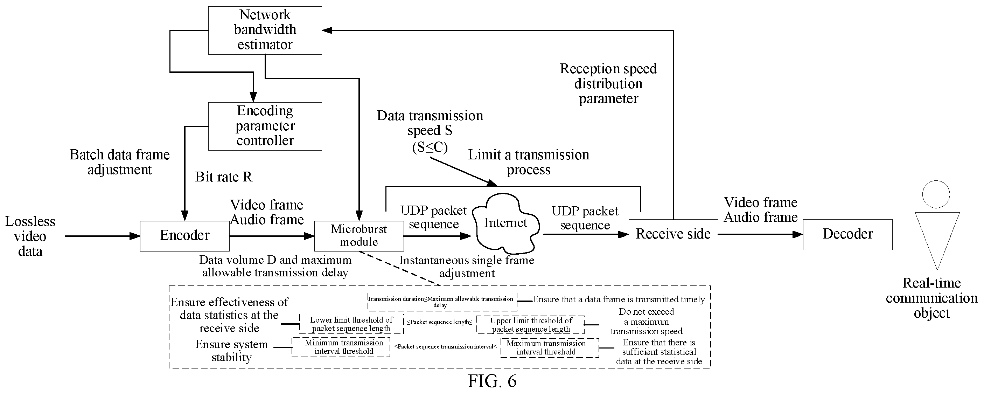

FIG. 6 is a schematic diagram of a data transmission method in an actual application scenario according to an embodiment of this application. A processing device may include an encoding parameter controller, a network bandwidth estimator, a microburst device, and another part.

The network bandwidth estimator having a bandwidth estimation function may reuse another known bandwidth estimation algorithm to estimate a current bottleneck link bandwidth (that is, an actual data transmission speed C corresponding to a data link), guide a microburst module to transmit data at a data transmission speed S in a long period, and have a capability to provide a congestion signal. A receive side needs to transmit a data reception status of the receive side to the network bandwidth estimator, and the estimator may obtain packet sequence reception duration corresponding to a plurality of received data packet sequences corresponding to the receive side in a measurement period, determine a reception speed distribution parameter, determine a adjustment bit rate R based on the reception speed distribution parameter, and transmit the bit rate R to the encoding parameter controller, so that the encoding parameter controller adjusts a bit rate corresponding to the encoder to the bit rate R, so that the encoder performs subsequent encoding based on the bit rate R. This ensures that a data output speed of the encoder is close to an actual data reception speed of the receive side. S≤C, so that it is ensured that the data transmission speed does not exceed an upper limit of the data transmission speed supported by the data link. When the microburst device adjusts a data transmission parameter, if a maximum allowable transmission delay cannot be satisfied even if an upper limit or a lower limit of parameter adjustment is reached, the network bandwidth estimator may be instructed to adjust the provided S when S≤C, to change the upper limit or lower limit of adjustment of the data transmission parameter.

In the actual application scenario, to-be-transmitted data is lossless video data. A corresponding video frame and audio frame are obtained through encoding by the encoder. The video frame and audio frame have corresponding transmission priorities. The transmission priority determines an order of transmission, and the transmission priority determines a priority for a UDP data packet obtained by splitting the audio frame and video frame. After receiving a data frame output by the encoder, the microburst device may split an audio frame and video frame in the data frame into data packets to obtain a plurality of corresponding UDP data packets, and transmit the UDP data packets corresponding to the video frame and audio frame to the receive side over the Internet in packet sequences. A decoder corresponding to the receive side decodes the UDP data packets to obtain video data and display the video data to a real-time communication object. For example, in a 60 Hz scenario, if the video frame priority is 2, the maximum allowable transmission delay is 1s/60, about 20 ms, and if the audio frame priority is 1, the maximum allowable transmission delay is 1s/15, about 100 ms.

The microburst device may adjust a packet sequence length and a packet sequence transmission interval to ensure that transmission duration of the data frame does not exceed the maximum allowable transmission delay, so as to ensure that the data frame is transmitted timely. The microburst device first estimates, based on an initial packet sequence length and an initial packet sequence transmission interval set in the microburst device during receiving the data frame, whether the transmission duration corresponding to the data frame exceeds the maximum allowable transmission delay corresponding to the data frame. If the transmission duration exceeds the maximum allowable transmission delay, the packet sequence length and the packet sequence transmission interval are adjusted, so that the transmission duration of the data frame does not exceed the maximum allowable transmission delay.

The packet sequence length is adjusted between a lower limit threshold of the packet sequence length and an upper limit threshold of the packet sequence length. The lower limit threshold of the packet sequence length is configured for ensuring effectiveness of data statistics at the receive side, and the upper limit threshold of the packet sequence length is configured for ensuring that a maximum transmission speed in a data transmission link is not exceeded. The packet sequence transmission interval is adjusted between a minimum transmission interval threshold and a maximum transmission interval threshold. The minimum transmission interval threshold is configured for ensuring stability of a real-time communication system, and the maximum transmission interval threshold is configured for ensuring that there is sufficient statistical data at the receive side. A specific manner for determining the threshold is described above.

When a data volume of the data frame is less than the lower limit threshold of the packet sequence length, the microburst device may wait for a subsequent data frame to be arranged into the same packet sequence for transmission while ensuring that transmission duration of the data frame does not exceed a corresponding maximum allowable transmission delay.

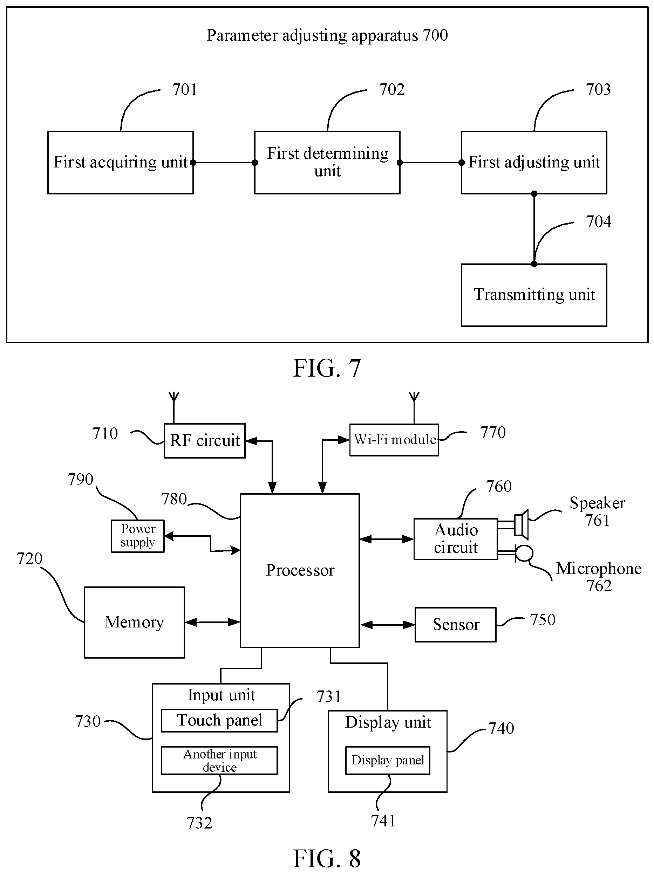

Based on the data transmission method provided in the foregoing embodiments, an embodiment of this application further provides a data transmission apparatus. FIG. 7 is a block diagram of a structure of a data transmission apparatus according to an embodiment of this application. The apparatus includes a first acquiring unit 701, a first determining unit 702, a first adjusting unit 703, and a transmitting unit 704.

The first acquiring unit 701 is configured to acquire an input data frame, where the input data frame has a corresponding maximum allowable transmission delay.

The first determining unit 702 is configured to determine, based on a data volume of the input data frame and an initial data transmission parameter, a first estimated transmission duration of the input data frame, where the initial data transmission parameter is a data transmission parameter for transmitting the input data frame.

The first adjusting unit 703 is configured to adjust, in response to the first estimated transmission duration exceeding the maximum allowable transmission delay, the initial data transmission parameter to obtain an adjusted data transmission parameter, where an estimated transmission duration for the input data frame determined based on the adjusted data transmission parameter is a second estimated transmission duration less than the first estimated transmission duration, and the second estimated transmission duration does not exceed the maximum allowable transmission delay.

The transmitting unit 704 is configured to transmit, based on the adjusted data transmission parameter, the input data frame to a receive side for the input data frame.

In a possible implementation, the data transmission parameter includes a packet sequence length and a packet sequence transmission interval. The packet sequence length identifies a quantity of input data packets included in each packet sequence when an input data packet is transmitted in packet sequence, and the input data packet is obtained by splitting the input data frame based on a unit data volume of a data packet.

The first determining unit 702 is specifically configured to:

determine, based on the data volume of the input data frame, the unit data volume of a data packet, an initial packet sequence length, and an initial packet sequence transmission interval, the first estimated transmission duration of the input data frame.

The transmitting unit 704 is specifically configured to:

split the input data frame based on the unit data volume of a data packet to obtain a plurality of input data packets of the input data frame;

generate, based on an adjusted packet sequence length in the adjusted data transmission parameter, a plurality of input packet sequences of the plurality of input data packets; and

transmit the plurality of input packet sequences to the receive side based on an adjusted packet sequence transmission interval in the adjusted data transmission parameter.

In a possible implementation, the input data frame is generated by an encoder. The apparatus further includes a second acquiring unit, a second determining unit, a third determining unit, and a second adjusting unit.

The second acquiring unit is configured to acquire respective packet sequence reception duration of a plurality of received packet sequences within a measurement period, where the received packet sequence is an input packet sequence received by the receive side.

The second determining unit is configured to determine, based on the respective packet sequence reception durations and packet sequence lengths of the plurality of received packet sequences, respective data packet reception speeds of the plurality of received packet sequences.

The third determining unit is configured to determine an adjustment bit rate based on the respective data packet reception speeds of the plurality of received packet sequences.

The second adjusting unit is configured to adjust a bit rate for the encoder to the adjustment bit rate, so that the encoder generates the input data frame based on the adjustment bit rate.

In a possible implementation, the third determining unit is specifically configured to:

generate a reception speed distribution parameter based on the respective data packet reception speeds of the plurality of received packet sequences, the reception speed distribution parameter identifying a quantity of received packet sequences in each of a plurality of reception speed ranges having the same range length; and

determine the adjustment bit rate based on a mode range corresponding to the reception speed distribution parameter, where a quantity of received packet sequences in the mode range is greater than quantities of received packet sequences in adjacent reception speed ranges on both sides of the mode range.

In a possible implementation, the reception speed distribution parameter corresponds to only a single mode range, and the third determining unit is specifically configured to:

determine, in response to not acquiring a congestion signal within the measurement period, an average value of data packet reception speeds of the received packet sequences in the mode range as the adjustment bit rate, the congestion signal identifying that an abnormality occurs in a data transmission speed of a data transmission link configured for transmitting the input packet sequence to the receive side; or

determine, in response to acquiring the congestion signal within the measurement period, a difference between the average value and a standard deviation of the data packet reception speeds of the received packet sequences within the measurement period as the adjustment bit rate.

In a possible implementation, the reception speed distribution parameter corresponds to a plurality of mode ranges, a quantity of the plurality of mode ranges is less than a preset quantity of ranges, and the third determining unit is specifically configured to:

determine, in response to not acquiring a congestion signal within the measurement period, an average value of data packet reception speeds of a plurality of received packet sequences in a first target range as the adjustment bit rate, the first target range being a mode range having a lowest reception speed of the plurality of mode ranges, and the congestion signal identifying that an abnormality occurs in a data transmission speed of a data transmission link configured for transmitting the to-be-transmitted packet sequence to the receive side; or

determine, in response to acquiring the congestion signal within the measurement period, a difference between the average value and a standard deviation of data packet reception speeds of a plurality of received packet sequences in a second target range as the adjustment bit rate, the second target range being defined from a right endpoint of a first negative mode range to a left endpoint of a second negative mode range, the first negative mode range being a negative mode range located on a left side of the first target range and closest to the first target range, the second negative mode range being a negative mode range located on a right side of the first target range and closest to the first target range, and where a quantity of received packet sequences in each negative mode range is less than quantities of received packet sequences in adjacent reception speed ranges on both sides of the negative mode range.

In a possible implementation, the reception speed distribution parameter corresponds to a plurality of mode ranges, a quantity of the plurality of mode ranges exceeds a preset quantity of ranges, and the apparatus further includes a processing unit.

The processing unit is configured to perform noise smoothing processing on the reception speed distribution parameter, where the noise smoothing processing is used for reducing the quantity of mode ranges in the reception speed distribution parameter.

The third determining unit is specifically configured to:
determine the adjustment bit rate based on mode ranges corresponding to the reception speed distribution parameter subjected to the noise smoothing processing.

In a possible implementation, a quantity of a plurality of mode ranges corresponding to the reception speed distribution parameter exceeds a preset quantity of ranges, and the third determining unit is specifically configured to:

determine, in response to a quantity of the plurality of received packet sequences within the measurement period being greater than a first preset quantity and not receiving a congestion signal within the measurement period, an average value of data packet reception speeds of a plurality of received packet sequences in a first target range as the adjustment bit rate, the first target range being a mode range having a lowest reception speed among the plurality of mode ranges, and the congestion signal identifying that an abnormality occurs in a data transmission speed of a data transmission link configured for transmitting the to-be-transmitted packet sequence to the receive side; and

reduce, in response to receiving the congestion signal within the measurement period, an initial bit rate of the encoder by multiplying a preset ratio to obtain the adjustment bit rate.

In a possible implementation, the adjustment bit rate does not exceed a data transmission speed of a data transmission link, and the data transmission link is configured for transmitting the to-be-transmitted packet sequence to the receive side.

In a possible implementation, the adjusted packet sequence length is between a lower limit threshold of the packet sequence length and an upper limit threshold of the packet sequence length, the upper limit threshold of the packet sequence length is determined based on a data transmission speed of a data transmission link and a minimum transmission interval threshold, the data transmission link is configured for transmitting the input packet sequence to the receive side, the packet sequence transmission interval is between the minimum transmission interval threshold and a maximum transmission interval threshold, and the maximum transmission interval threshold is configured for satisfying that a quantity of input packet sequences receivable by the receive side within the measurement period is greater than a preset quantity.

An embodiment of this application further provides a computer device. The following describes the device with reference to the accompanying drawings. As shown in FIG. 8, an embodiment of this application provides a device. The device may be further a terminal device. The terminal device may be any intelligent terminal including a mobile phone, a tablet computer, a personal digital assistant (PDA for short), a point of sales (POS for short), an on-board computer, and the like. An example in which the terminal device is a mobile phone is used.

FIG. 8 is a block diagram of a structure of a part of a mobile phone related to a terminal device according to an embodiment of this application. Refer to FIG. 8. The mobile phone includes: a radio frequency (RF for short) circuit 710, a memory 720, an input unit 730, a display unit 740, a sensor 750, an audio circuit 760, a wireless fidelity (Wi-Fi for short) module 770, a processor 780, a power supply 790, and another component. A person skilled in the art may understand that the structure of the mobile phone shown in FIG. 8 does not constitute a limitation on the mobile phone, and the mobile phone may include more or fewer components than those shown in the figure, or some components may be combined, or a different component deployment may be used.

The following specifically describes the components of the mobile phone with reference to FIG. 8.

The RF circuit 710 may be configured to receive and send a signal during receiving and sending information or making a call. Particularly, after receiving downlink information from a base station, the RF circuit 710 sends the information to the processor 780 for processing. In addition, the RF circuit 710 sends related uplink data to the base station. Generally, the RF circuit 710 includes but is not limited to an antenna, at least one amplifier, a transceiver, a coupler, a low noise amplifier (LNA for short), a duplexer, and the like. In addition, the RF circuit 710 may further communicate with a network and another device through wireless communication. The wireless communication may use any communication standard or protocol, which includes but is not limited to global system for mobile communications (GSM for short), general packet radio service (GPRS for short), code division multiple access (CDMA for short), wideband code division multiple access (WCDMA for short), long term evolution (LTE for short), email, short message service (SMS for short), and the like.

The memory 720 may be configured to store a software program and module. The processor 780 runs the software program and module stored in the memory 720, to implement various functional applications and data processing of the mobile phone. The memory 720 may mainly include a program storage area and a data storage area. The program storage area may store an operating system, an application program that is required by at least one function (for example, a sound playback function and an image playback function), and the like. The data storage area may store data (for example, audio data and an address book) created during use of the mobile phone, and the like. In addition, the memory 720 may include a high-speed random access memory, and may alternatively include a non-volatile memory, for example, at least one magnetic disk storage device, a flash memory device, or another volatile solid-state storage device.

The input unit 730 may be configured to receive input digit or character information, and generate a key signal input related to object settings and function control of the mobile phone. Specifically, the input unit 730 may include a touch panel 731 and another input device 732. The touch panel 731, which may also be referred to as a touchscreen, may collect a touch operation of an object on or near the touch panel (such as an operation of an object on or near the touch panel 731 by using any suitable item or accessory such as a finger or a stylus), and drive a corresponding connection apparatus according to a preset program. In one embodiment, the touch panel 731 may include two parts: a touch detection apparatus and a touch controller. The touch detection apparatus detects a touch location of the object, detects a signal generated by the touch operation, and transfers the signal to the touch controller. The touch controller receives the touch information from the touch detection apparatus, converts the touch information into touch point coordinates, and sends the touch point coordinates to the processor 780. Moreover, the touch controller may receive and execute a command sent from the processor 780. In addition, the touch panel 731 may be implemented by using various types, such as a resistive type, a capacitance type, an infrared type, and a surface sound wave type. In addition to the touch panel 731, the input unit 730 may further include the another input device 732. Specifically, the another input device 732 may include but is not limited to one or more of a physical keyboard, a functional key (such as a sound volume control key or a switch key), a track ball, a mouse, and a joystick.

The display unit 740 may be configured to display information input by the object or information provided for the object, and various menus of the mobile phone. The display unit 740 may include a display panel 741. In one embodiment, the display panel 741 may be configured by using a liquid crystal display (LCD for short), an organic light-emitting diode (OLED for short), or the like. Further, the touch panel 731 may cover the display panel 741. After detecting a touch operation on or near the touch panel 731, the touch panel 731 transfers the touch operation to the processor 780, to determine a type of a touch event. Then, the processor 780 provides corresponding visual output on the display panel 741 based on the type of the touch event. Although in FIG. 8, the touch panel 731 and the display panel 741 are used as two separate parts to implement input and output functions of the mobile phone, in some embodiments, the touch panel 731 and the display panel 741 may be integrated to implement the input and output functions of the mobile phone.

The mobile phone may further include at least one sensor 750 such as an optical sensor, a motion sensor, or another sensor. Specifically, the optical sensor may include an ambient light sensor and a proximity sensor, where the ambient light sensor may adjust luminance of the display panel 741 based on the luminance of the ambient light, and the proximity sensor may switch off the display panel 741 and/or backlight when the mobile phone is moved to the ear. As one type of the motion sensor, an acceleration sensor may detect magnitude of accelerations in various directions (usually on three axes), may detect magnitude and a direction of the gravity in a static situation, and may be applied to an application that recognizes the attitude of the mobile phone (for example, switching between landscape orientation and portrait orientation, a related game, and magnetometer attitude calibration), a function related to vibration recognition (such as a pedometer and a knock), and the like. Other sensors, such as a gyroscope, a barometer, a hygrometer, a thermometer, and an infrared sensor, which may be configured in the mobile phone, are not further described herein.

The audio circuit 760, a speaker 761, and a microphone 762 may provide audio interfaces between the object and the mobile phone. The audio circuit 760 may convert received audio data into an electric signal and transmit the electric signal to the speaker 761. The speaker 761 converts the electric signal into a sound signal and output the sound signal. In another aspect, the microphone 762 converts a collected sound signal into an electric signal. The audio circuit 760 receives the electric signal, converts the electric signal into audio data, and outputs the audio data to the processor 780 for processing to send processed audio data to another mobile terminal through the RF circuit 710; or outputs the audio data to the memory 720 for further processing.

Wi-Fi is a short distance wireless transmission technology. The mobile phone may help, by using the Wi-Fi module 770, the object to receive and send an email, browse a web page, access stream media, and the like. The Wi-Fi module 770 provides wireless broadband Internet access for the object. Although FIG. 8 shows the Wi-Fi module 770, the Wi-Fi module 770 is not a necessary component of the mobile phone, and when required, the Wi-Fi module 770 may be omitted provided that the scope of the essence of the disclosure is not changed.

The processor 780 is a control center of the mobile phone, and is connected to various parts of the entire mobile phone through various interfaces and lines. By running or executing the software program and/or the module stored in the memory 720, and invoking data stored in the memory 720, the processor 780 performs various functions of the mobile phone and performs data processing, to perform overall detection on the mobile phone. In one embodiment, the processor 780 may include one or more processing units. Preferably, the processor 780 may integrate an application processor and a modem. The application processor mainly processes an operating system, an object interface, an application program, and the like. The modem mainly processes wireless communication. The foregoing modem may alternatively not be integrated into the processor 780.

The mobile phone further includes the power supply 790 (such as a battery) for supplying power to the components. Preferably, the power supply may be logically connected to the processor 780 by using a power supply management system, so that functions such as charging, discharging, and power consumption management by using the power supply management system are implemented.

Although not shown, the mobile phone may further include a camera, a Bluetooth module, and the like, which are not described herein again.

In this embodiment, the processor 780 included in the terminal device further has the following functions:

acquiring an input data frame, the input data frame having a corresponding maximum allowable transmission delay;

determining, based on a data volume of the input data frame and an initial data transmission parameter, a first estimated transmission duration of the input data frame, the initial data transmission parameter being a data transmission parameter for transmitting the input data frame;

adjusting, in response to the first estimated transmission duration exceeding the maximum allowable transmission delay, the initial data transmission parameter to obtain an adjusted data transmission parameter, an estimated transmission duration for the input data frame determined based on the adjusted data transmission parameter being a second estimated transmission duration less than the first transmission duration, and the second estimated transmission duration not exceeding the maximum allowable transmission delay; and

transmitting, based on the adjusted data transmission parameter, the input data frame to a receive side corresponding to the to-be-transmitted data frame.

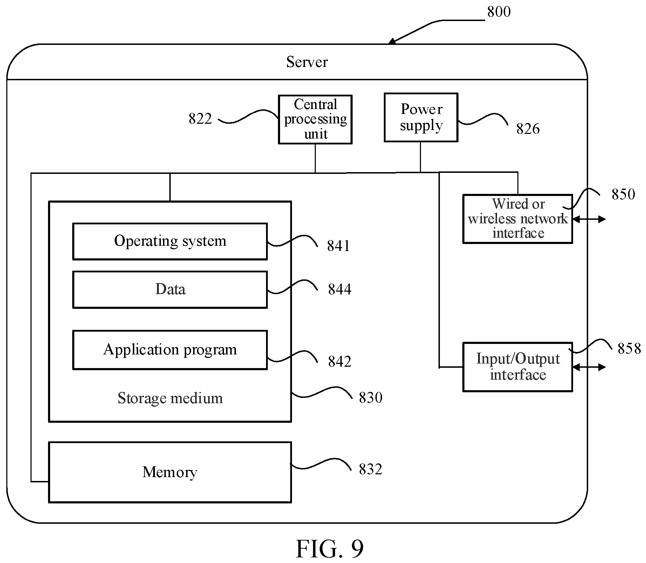

An embodiment of this application further provides a server. FIG. 9 is a diagram of a structure of a server 800 according to an embodiment of this application. The server 800 greatly differs due to different configurations or performances. The server 800 may include one or more central processing units (CPUs for short) 822 (for example, one or more processors) and a memory 832, one or more store application programs 842 or a storage medium 830 of data 844 (for example, one or more mass storage devices). The memory 832 and the storage medium 830 may be used for temporary storage or persistent storage. A program stored in the storage medium 830 may include one or more modules (not shown in the figure), and each module may include a series of instruction operations on the server. Further, the central processing unit 822 may be configured to communicate with the storage medium 830 and perform, on the server 800, the series of instruction operations in the storage medium 830.

The server 800 may further include one or more power supplies 826, one or more wired or wireless network interfaces 850, one or more input/output interfaces 858, and/or one or more operating systems 841, for example, Windows Server™, Mac OS X™, Unix™, Linux™, or FreeBSD™.

Operations performed by the server in the foregoing embodiments may be based on the structure of the server shown in FIG. 9.

An embodiment of this application further provides a computer-readable storage medium, configured to store a computer program. The computer program is configured for performing any implementation of the data transmission method according to the foregoing embodiments.

An embodiment of this application further provides a computer program product including an instruction. When the computer program product runs on a computer, the computer is caused to perform the data transmission method according to any one of the foregoing embodiments.

A person of ordinary skill in the art may understand that all or some operations for implementing the foregoing method embodiments may be completed by program instructing related hardware, the foregoing program may be stored in a computer-readable storage medium, and when being executed, the program performs operations including the foregoing method embodiments. In addition, the foregoing storage medium may be at least one of the following: any medium that can store program code, such as a read-only memory (ROM for short), a random access memory (RAM), a magnetic disk, or an optical disc.

Embodiments of this specification are all described in a progressive manner. For same or similar parts in embodiments, refer to these embodiments. Descriptions of each embodiment focus on a difference from other embodiments. Especially, device and system embodiments are basically similar to the method embodiments, and therefore is described briefly; for related parts, reference may be made to partial descriptions in the method embodiments. The described device and system embodiments are merely exemplary. The units described as separate parts may or may not be physically separated, and parts displayed as units may or may not be physical units, may be located in one position, or may be distributed on a plurality of network units. Some or all of the modules may be selected based on actual needs to achieve the objectives of the solutions of embodiments. A person of ordinary skill in the art may understand and implement embodiments without creative efforts.

The foregoing descriptions are merely a specific implementation of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, executable by a processing device, the method comprising:

    acquiring an input data frame, the input data frame having a corresponding maximum allowable transmission delay;
    determining, based on a data volume of the input data frame and an initial data transmission parameter for transmitting the input data frame, a first estimated transmission duration of the input data frame;
    adjusting, in response to the first estimated transmission duration exceeding the maximum allowable transmission delay, the initial data transmission parameter to obtain an adjusted data transmission parameter, an estimated transmission duration for the input data frame determined based on the adjusted data transmission parameter being a second estimated transmission duration less than the first estimated transmission duration, and the second estimated transmission duration not exceeding the maximum allowable transmission delay; and
    transmitting, based on the adjusted data transmission parameter, the input data frame to a receive side for the input data frame.

2. The method according to claim 1, wherein:

    the data transmission parameter comprises a packet sequence length and a packet sequence transmission interval, the packet sequence length identifying a quantity of input data packets comprised in each packet sequence when a input data packet is transmitted in a packet sequence, and the input data packet is obtained by splitting the input data frame based on a unit data volume of a data packet;
    the determining, based on a data volume of the input data frame and an initial data transmission parameter, a first estimated transmission duration of the input data frame comprises:

        determining, based on the data volume of the input data frame, the unit data volume of a data packet, an initial packet sequence length, and an initial packet sequence transmission interval, the first estimated transmission duration of the input data frame; and
        the transmitting, based on the adjusted data transmission parameter, the input data frame to a receive side for the input data frame comprises:

splitting the input data frame based on the unit data volume of a data packet to obtain a plurality of input data packets of the input data frame;

generating, based on an adjusted packet sequence length in the adjusted data transmission parameter, a plurality of input packet sequences of the plurality of input data packets; and

transmitting the plurality of input packet sequences to the receive side based on an adjusted packet sequence transmission interval in the adjusted data transmission parameter.

3. The method according to claim 2, wherein the input data frame is generated by an encoder, and the method further comprises:

acquiring respective packet sequence reception durations of a plurality of received packet sequences within a measurement period, the received packet sequences being input packet sequences received by the receive side;

determining, based on the respective packet sequence reception durations and packet sequence lengths of the plurality of received packet sequences, respective data packet reception speeds of the plurality of received packet sequences;

determining an adjustment bit rate based on the respective data packet reception speeds of the plurality of received packet sequences; and

adjusting a bit rate for the encoder to the adjustment bit rate, for the encoder to generate the input data frame based on the adjustment bit rate.

4. The method according to claim 3, wherein the determining an adjustment bit rate based on the respective data packet reception speeds of the plurality of received packet sequences comprises:

generating a reception speed distribution parameter based on the respective data packet reception speeds of the plurality of received packet sequences, the reception speed distribution parameter identifying a quantity of received packet sequences in each of a plurality of reception speed ranges having the same range length; and

determining the adjustment bit rate based on a mode range corresponding to the reception speed distribution parameter, wherein a quantity of received packet sequences in the mode range is greater than quantities of received packet sequences in adjacent reception speed ranges on both sides of the mode range.

5. The method according to claim 4, wherein the reception speed distribution parameter corresponds to only a single mode range, and the determining the adjustment bit rate based on a mode range corresponding to the reception speed distribution parameter comprises:

determining, in response to not acquiring a congestion signal within the measurement period, an average value of data packet reception speeds of the received packet sequences in the mode range as the adjustment bit rate, the congestion signal identifying that an abnormality occurs in a data transmission speed of a data transmission link configured for transmitting the input packet sequence to the receive side; or

determining, in response to acquiring the congestion signal within the measurement period, a difference between the average value and a standard deviation of the data packet reception speeds of the received packet sequences within the measurement period as the adjustment bit rate.

6. The method according to claim 4, wherein the reception speed distribution parameter corresponds to a plurality of mode ranges, a quantity of the plurality of mode ranges is less than a preset quantity of ranges, and

the determining the adjustment bit rate based on a mode range corresponding to the reception speed distribution parameter comprises:

determining, in response to not acquiring a congestion signal within the measurement period, an average value of data packet reception speeds of a plurality of received packet sequences in a first target range as the adjustment bit rate, the first target range being a mode range having a lowest reception speed among the plurality of mode ranges, and the congestion signal identifying that an abnormality occurs in a data transmission speed of a data transmission link configured for transmitting the input packet sequence to the receive side; or

determining, in response to acquiring the congestion signal within the measurement period, a difference between the average value and a standard deviation of data packet reception speeds of a plurality of received packet sequences in a second target range as the adjustment bit rate, the second target range being defined from a right endpoint of a first negative mode range to a left endpoint of a second negative mode range, the first negative mode range being a negative mode range located on a left side of the first target range and closest to the first target range, the second negative mode range being a negative mode range located on a right side of the first target range and closest to the first target range, wherein a quantity of received packet sequences in each negative mode range is less than quantities of received packet sequences in adjacent reception speed ranges on both sides of the negative mode range.

7. The method according to claim 4, wherein the reception speed distribution parameter corresponds to a plurality of mode ranges, a quantity of the plurality of mode ranges exceeds a preset quantity of ranges, and the method further comprises:

    performing noise smoothing processing on the reception speed distribution parameter, the noise smoothing processing being used for reducing the quantity of the mode ranges in the reception speed distribution parameter; and
    the determining the adjustment bit rate based on a mode range corresponding to the reception speed distribution parameter comprises:
    determining the adjustment bit rate based on mode ranges corresponding to the reception speed distribution parameter subjected to the noise smoothing processing.

8. The method according to claim 4, wherein a quantity of a plurality of mode ranges corresponding to the reception speed distribution parameter exceeds a preset quantity of ranges, and the determining the adjustment bit rate based on a mode range corresponding to the reception speed distribution parameter comprises:

    determining, in response to a quantity of the plurality of received packet sequences within the measurement period being greater than a first preset quantity and not receiving a congestion signal within the measurement period, an average value of data packet reception speeds of a plurality of received packet sequences in a first target range as the adjustment bit rate, the first target range being a mode range having a lowest reception speed among the plurality of mode ranges, and the congestion signal being identifying that an abnormality occurs in a data transmission speed of a data transmission link configured for transmitting the input packet sequence to the receive side; and
    reducing, in response to receiving the congestion signal within the measurement period, an initial bit rate for the encoder by multiplying a preset ratio to obtain the adjustment bit rate.

9. The method according to claim 3, wherein the adjustment bit rate does not exceed a data transmission speed of a data transmission link, and the data transmission link is configured for transmitting the input packet sequence to the receive side.

10. The method according to claim 3, wherein the adjusted packet sequence length is between a lower limit threshold of the packet sequence length and an upper limit threshold of the packet sequence length, the upper limit threshold of the packet sequence length is determined based on a data transmission speed of a data transmission link and a minimum transmission interval threshold, the data transmission link is configured for transmitting the input packet sequence to the receive side, the packet sequence transmission interval is between the minimum transmission interval threshold and a maximum transmission interval threshold, and the maximum transmission interval threshold is configured for satisfying that a quantity of input packet sequences receivable by the receive side within the measurement period is greater than a preset quantity.

11. A data transmission apparatus, comprising a first acquiring unit, a first determining unit, a first adjusting unit, and a transmitting unit,

    the first acquiring unit being configured to acquire an input data frame, the input data frame having a corresponding maximum allowable transmission delay;
    the first determining unit being configured to determine, based on a data volume of the input data frame and an initial data transmission parameter for transmitting the input data frame, a first estimated transmission duration of the input data frame;
    the first adjusting unit being configured to adjust, in response to the first estimated transmission duration exceeding the maximum allowable transmission delay, the initial data transmission parameter to obtain an adjusted data transmission parameter, an estimated transmission duration for the input data frame determined based on the adjusted data transmission parameter being a second estimated transmission duration less than the first estimated transmission duration, and the second estimated transmission duration not exceeding the maximum allowable transmission delay; and
    the transmitting unit being configured to transmit, based on the adjusted data transmission parameter, the input data frame to a receive side for the input data frame.

12. The apparatus according to claim 11, wherein the data transmission parameter comprises a packet sequence length and a packet sequence transmission interval, the packet sequence length identifying a quantity of input data packets comprised in each packet sequence when a input data packet is transmitted in of packet sequence, and the input data packet is obtained by splitting the input data frame based on a unit data volume of a data packet;
the first determining unit is specifically configured to:

determine, based on the data volume of the input data frame, the unit data volume of a data packet, an initial packet sequence length, and an initial packet sequence transmission interval, the first estimated transmission duration of the input data frame; and
the transmitting unit is specifically configured to:

split the input data frame based on the unit data volume of a data packet to obtain a plurality of input data packets of the input data frame;
generate, based on an adjusted packet sequence length in the adjusted data transmission parameter, a plurality of input packet sequences of the plurality of input data packets; and
transmit the plurality of input packet sequences to the receive side based on an adjusted packet sequence transmission interval in the adjusted data transmission parameter.

13. A computer device, comprising a processor and a memory,

the memory being configured to store a computer program and transmit the computer program to the processor; and
the processor being configured to perform, according to the computer program, the data transmission method according to any one of claims 1 to 10.

14. A computer-readable storage medium, configured to store a computer program, the computer program being configured for performing the data transmission method according to any one of claims 1 to 10.

15. A computer program product comprising a computer program, the computer program product, when running on a computer, causing the computer to perform the data transmission method according to any one of claims 1 to 10.

FIG. 1

## FIG. 2

To-be-transmitted
data

Encoder

To-be-transmitted
data frame

Processing
device

To-be-transmitted
packet sequence

Receive side

Unit data volume of a
data packet

To-be-transmitted
data packet

Packet sequence length is 4

To-be-transmitted
data frame

To-be-transmitted
packet sequence

## FIG. 3

Quantity of
received packet
sequences

Mode range
corresponding
to a low
reception speed

Mode range

Data packet
reception speed

## FIG. 4

FIG. 5

Lossless video data → Encoder

Batch data frame adjustment

Encoder → Video frame / Audio frame → Microburst module

Network bandwidth estimator

Encoding parameter controller

Bit rate R

Data volume D and maximum allowable transmission delay

Instantaneous single frame adjustment

Microburst module → UDP packet sequence → Internet → UDP packet sequence → Receive side

Data transmission speed S $(S \leq C)$

Limit a transmission process

Reception speed distribution parameter

Receive side → UDP packet sequence → Video frame / Audio frame → Decoder → Real-time communication object

Ensure effectiveness of data statistics at the receive side

Ensure system stability

Transmission duration $\leq$ Maximum allowable transmission delay — Ensure that a data frame is transmitted timely

Lower limit threshold of packet sequence length $\leq$ Packet sequence length $\leq$ Upper limit threshold of packet sequence length — Do not exceed a maximum transmission speed

Minimum transmission interval threshold $\leq$ Packet sequence transmission interval $\leq$ Maximum transmission interval threshold — Ensure that there is sufficient statistical data at the receive side

FIG. 6

27

Parameter adjusting apparatus 700

701

702

703

First acquiring unit

First determining unit

First adjusting unit

704

Transmitting unit

FIG. 7

710 — RF circuit

Wi-Fi module — 770

790

780

760

Power supply

Processor

Audio circuit

Speaker 761

Microphone 762

720

Memory

Sensor — 750

731

Input unit

Touch panel

730

Another input device

Display unit

Display panel

740

732

741

FIG. 8

800

Server

822 — Central processing unit

Power supply — 826

850 — Wired or wireless network interface

Operating system — 841

Data — 844

Application program — 842

Storage medium — 830

858 — Input/Output interface

Memory — 832

FIG. 9

## INTERNATIONAL SEARCH REPORT

| International application No. |
| --- |
| **PCT/CN2023/124849** |

### A. CLASSIFICATION OF SUBJECT MATTER

H04L47/12(2022.01)i

According to International Patent Classification (IPC) or to both national classification and IPC

### B. FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT, ENTXTC, DWPI, ENTXT: 延迟, 时长, 延时, 时延, 时间, 实际, 预估, 估计, 调整, delay, duration, latency, time, actual, estimate, adjust

### C. DOCUMENTS CONSIDERED TO BE RELEVANT

| Category* | Citation of document, with indication, where appropriate, of the relevant passages | Relevant to claim No. |
| --- | --- | --- |
| PX | CN 115499374 A (TENCENT TECHNOLOGY (SHENZHEN) CO., LTD.) 20 December 2022 (2022-12-20)<br>claims 1-14, description, paragraphs [0032]-[0127], and figures 1-9 | 1-15 |
| X | CN 108271212 A (CHINA ACADEMY OF TELECOMMUNICATIONS TECHNOLOGY) 10 July 2018 (2018-07-10)<br>description, paragraphs [0091]-[0237], and figures 1-7 | 1, 11, 13-15 |
| A | CN 113037624 A (HUAWEI TECHNOLOGIES CO., LTD.) 25 June 2021 (2021-06-25)<br>entire document | 1-15 |
| A | CN 113992588 A (INSPUR ELECTRONIC INFORMATION INDUSTRY CO., LTD.) 28 January 2022 (2022-01-28)<br>entire document | 1-15 |
| A | US 2022255866 A1 (BOE TECHNOLOGY GROUP CO., LTD.) 11 August 2022 (2022-08-11)<br>entire document | 1-15 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 December 2023** | **19 December 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/124849**

| Patent document cited in search report | | | Publication date (day/month/year) | Patent family member(s) | | | Publication date (day/month/year) |
|---|---|---|---|---|---|---|---|
| CN | 115499374 | A | 20 December 2022 | HK | 40079089 | A0 | 14 April 2023 |
| CN | 108271212 | A | 10 July 2018 | None | | | |
| CN | 113037624 | A | 25 June 2021 | WO | 2021129861 | A1 | 01 July 2021 |
| | | | | EP | 4072080 | A1 | 12 October 2022 |
| | | | | US | 2022329535 | A1 | 13 October 2022 |
| CN | 113992588 | A | 28 January 2022 | None | | | |
| US | 2022255866 | A1 | 11 August 2022 | WO | 2021197008 | A1 | 07 October 2021 |

Form PCT/ISA/210 (patent family annex) (July 2022)

EP 4 564 775 A1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211392917